# EUROPÄISCHE PATENTANMELDUNG

(11) **EP 3 747 585 A1**
(43) Veröffentlichungstag der Anmeldung: **09.12.2020**
(21) Anmeldenummer: 20178286.9
(22) Anmeldetag: 04.06.2020
(51) Int. Cl.: B23K 9/095, B23K 9/127, B23K 31/12, B23K 9/02, B23K 9/173

(54) **VERFAHREN ZUR AUTOMATISCHEN STEUERUNG EINES METALL-SCHWEISSPROZESSES**

(30) Priorität: 04.06.2019 AT 505072019
(71) Anmelder: SMF Friedlbinder GmbH, 1220 Wien (AT)
(72) Erfinder: Friedlbinder, Ludwig, 1220 Wien (AT)
(74) Vertreter: Müllner, Martin

(57) **Zusammenfassung**

Das Verfahren zur automatischen Steuerung eines Metall-Schweißprozesses zum Verschweißen von zwei Blechen oder Rohren mit einer V-Naht oder einer HV-Naht basiert auf sensorgestützter visueller Datenerfassung eines der Schweißnaht vorauseilenden Nahtsuchsystems (1) und auf der Erfassung der realen Schweißparameter während des Schweißprozesses, wobei das Nahtsuchsystem (1) die Position der oberen und der unteren Kante der Fase von zumindest einem Blech bzw. Rohr misst, und wobei unter Berücksichtigung dieser gemessenen Parameter die Schweißparameter eingestellt werden. Erfindungsgemäß ist der Schweißprozess ein Schweißprozess mit Wurzelschweißung, das heißt dass die Bleche bzw. Rohre vor dem Schweißprozess einen Abstand (b) zueinander haben, sodass am unteren Ende des V ein Steg mit parallelen Wänden gebildet ist. Erfindungsgemäß wird die Höhe (d0) des Stegs aus der Differenz der bekannten Blechdicke (d1, d2) bzw. der bekannten Rohrwandstärke und der gemessenen Höhe (h1, h2) der Fase berechnet.

## Beschreibung

### Technisches Gebiet

Die vorliegende Erfindung betrifft ein Verfahren zur automatischen Steuerung eines Metall-Schweißprozesses zum Verschweißen von zwei Blechen oder Rohren mit einer V-Naht oder einer HV-Naht, basierend auf sensorgestützter visueller Datenerfassung eines der Schweißnaht vorauseilenden Nahtsuchsystems, und auf der Erfassung der realen Schweißparameter während des Schweißprozesses, wobei das Nahtsuchsystem die Position der oberen und der unteren Kante der Fase von zumindest einem Blech bzw. Rohr misst, und wobei unter Berücksichtigung dieser gemessenen Parameter die Schweißparameter eingestellt werden.

### Stand der Technik

Schweiß-Nahtsucheinrichtungen bzw. Schweiß-Vorrichtungen, die automatisch einer vorgegebenen Kurve folgen, sind bereits bekannt und weit verbreitet. Meistens werden sie bei einer großen Anzahl gleicher Schweißnähte verwendet, da bei einer großen Stückzahl die Kosten der Ermittlung und Eingabe der entsprechend benötigten Parameter sowie die hohen Anlagekosten vergleichsweise gering sind.

Beispielsweise offenbart DE 102010028593 die Herstellung entlang räumlicher, in eine Ebene abwickelbarer Verschneidungskurven verlaufender Schweißnähte und ein dafür entsprechendes Führungssystem unter Verwendung eines Steuerungscomputers oder einer manuellen Steuerungseinrichtung zur Steuerung der Bewegung.

Weiters ist es vorteilhaft, wenn bei einem automatisierten Schweißprozess ohne menschlichen Arbeitsaufwand überprüft werden kann, ob der Schweißprozess erfolgreich war.

Hierzu kann unter anderem DE 69509258 T herangezogen werden, das ein Verfahren zur Überprüfung der Schweißnaht durch Messen der Bogenspannung, Speicherung dieser Werte und entsprechender Analyse dieser Werte beschreibt.

Eine zu wünschende Eigenschaft bei automatischer Steuerung besteht darin, dass die Schweißparameter entsprechend vorliegender Parameter angepasst werden.

Dies wird in DE 60030348 T beschrieben. Die dort geoffenbarte Vorrichtung umfasst ein elektrisches Lichtbogenschweißgerät, das durch eine Steuereinheit gesteuert wird und Schweißparameter aufgrund der Schweißbedingungen anpasst. Beispielsweise kann der Schweißstrom automatisch verringert werden, wenn die festgestellte Länge des vorstehenden Endes des Schweißdrahts einen vorbestimmten Wert überschreitet.

Es gibt verschiedene Schweißnahtarten, beispielsweise eine I-Naht, das ist eine Form einer Stumpfnaht; eine HV-Naht (oder HY-Naht), ebenfalls eine Form einer Stumpfnaht; eine Kehlnaht am T-Stoß; verschiedene Sondernahten, wie z.B. eine 3-Blechnaht; und eine V-Naht mit Wurzelschweißung.

Bei der Y-Naht sind (im Vergleich zur I-Naht) die Kanten der Bleche oben abgeschrägt, unten verlaufen sie normal zur Ebene der Bleche. In diesem Bereich liegen die Bleche aneinander an, darüber ist die Schweißfuge V-förmig erweitert, was insgesamt einem Y ähnelt. Verschweißt wird nur in der V-förmigen Erweiterung. Bei der HY-Naht ist nur ein Blech abgeschrägt.

Bei der V-Naht sind die Kanten der Bleche zur Gänze abgeschrägt, und sie stoßen unten aneinander. Die Schweißfuge erstreckt sich somit über den gesamten Blechquerschnitt. Bei der V-Naht mit Wurzelschweißung gibt es (ähnlich wie bei der Y-Naht) unten einen Bereich, wo die Kante normal zur Blechebene verläuft, aber die Bleche haben (im Gegensatz zur Y-Naht) einen Abstand zueinander von zumindest 1 mm, meist rund 2 mm. Der Bereich, wo die Kante normal zur Blechebene verläuft, wird als "Steg" oder "Wurzel" bezeichnet. Die Höhe des Stegs ist geringer als dessen Breite, also als der Abstand der Bleche. Bei der HV-Naht weist nur ein Blech die Abschrägung auf.

Die "V-Naht mit Wurzelschweißung" ist erfahrungsgemäß die am schwierigsten zu schweißende Naht. Wenn etwas mehr Material abgetragen wird, dann ist der Steg (der parallelwandige Abschnitt des Spalts) niedrig, wenn etwas weniger abgetragen wird, dann ist der Steg höher. Die Höhe des Stegs schwankt oft auch innerhalb einer Naht. Ebenso kann sich der Öffnungswinkel (Fasenwinkel des V, HV) verändern.

Bei herkömmlichen Nahtsuchsystemen wird zwar die Naht gesucht, aber die Höhe der Wurzel (des Stegs) nicht bestimmt.

Wird die Höhe der Wurzel beim Schweißen nicht berücksichtigt, kann es leicht zu einem "Durchbrennen" oder zu einem unvollständigen Verschweißen der Wurzel kommen. Die Gefahr der unvollständigen Durchschweißung (Kantenerfassung) und des Durchbrennens lässt nur einen sehr geringen Spielraum der Parameter zu.

Aus EP 2724808 A ist ein Verfahren zum automatischen Verschweißen von Rohren für Pipelines bekannt. Es handelt sich um ein so genanntes Engspaltschweißen. Die Schweißfuge wird mit einem Laserscanner vermessen, damit die Schweißparameter abhängig von der genauen Geometrie optimiert werden können. Am unteren Ende der Schweißfuge befindet sich ein Vorsprung mit einer Höhe von 0,040", was 1 mm entspricht (siehe Fig. 1 dieser Schrift). Die Schweißfuge ist somit unten geschlossen, sodass die Kontur der Schweißfuge vollständig mit dem Laserscanner erfasst werden kann.

Aus der gattungsbildenden US 6362456 B ist ein Verfahren zum automatischen Verschweißen von zwei Blechen mit einer V-Naht ohne Wurzelschweißung bekannt, bei dem ebenfalls die Schweißfuge mit einem Laserscanner vermessen wird, damit die Schweißparameter abhängig von der genauen Geometrie optimiert werden können. Auch hier berühren sich die beiden zu verschweißenden Bleche unten (siehe insbesondere Fig. 1 dieser Schrift), sodass die Kontur der Schweißfuge mit dem Laserscanner vollständig vermessen werden kann.

Wendet man diese Verfahren auf das Schweißen einer V-Naht mit Wurzelschweißung an, so ergibt sich das Problem, dass man die Höhe des Stegs nicht direkt messen kann. Die Bleche dürfen nämlich im Bereich der Schweißfuge nicht unterstützt sein, denn sonst würden sie mit der Unterlage verschweißen; daher kann der Laserscanner das untere Ende des Stegs nicht detektieren, er sieht ins Leere. Es bietet sich nun an, als unteres Ende des Stegs die Auflagefläche der Bleche anzunehmen. Wie im Rahmen der vorliegenden Erfindung festgestellt wurde, erhält man dadurch aber nur sehr ungenaue Werte für die Steghöhe. Das liegt daran, dass die Bleche im Bereich der Schweißfuge nicht ganz eben sind, auch dann nicht, wenn die Bleche im Bereich außerhalb der Schweißfuge gut auf der ebenen Auflagefläche aufgespannt sind.

### Kurzbeschreibung der Erfindung

Ziel der vorliegenden Erfindung ist es, ein Verfahren für den automatisierten Schweißprozess zu schaffen, bei dem die Schweißparameter auch bei einer V-Naht oder HV-Naht mit Wurzelschweißung so eingestellt werden, dass die Schweißnaht qualitativ besser gefertigt wird, sowie ein effizienteres und genaueres Verfahren zur Überwachung der Schweißnaht geschaffen wird.

Erfindungsgemäß ist daher vorgesehen, dass der Schweißprozess ein Schweißprozess mit Wurzelschweißung ist, das heißt dass die Bleche bzw. Rohre vor dem Schweißprozess einen Abstand von 2 mm (+/- 1 mm) zueinander haben und am unteren Ende des V ein Steg mit parallelen Wänden gebildet ist, und dass die Höhe des Stegs aus der Differenz der bekannten Blechdicke bzw. der bekannten Rohrwandstärke und der gemessenen Höhe der Fase berechnet wird.

Die der Erfindung zu Grunde liegende Idee besteht darin, dass die Blechdicke (bzw. Rohrwandstärke) genau bekannt ist, und die Abweichungen vom Sollwert der Blechdicke (bzw. Rohrwandstärke) wesentlich geringer sind als die Abweichungen von der Planheit (bzw. der Rundheit). Wenn man nun die Position der Kanten der Fase misst (woraus sich der Fasenwinkel errechnen lässt), kann man die vertikale Ausdehnung der Fase leicht durch Subtraktion berechnen. (Alternativ dazu kann man auch den Fasenwinkel messen, nur die horizontale Position der Kanten der Fase messen und daraus die vertikale Ausdehnung der Fase berechnen.) Die Höhe des Stegs (der Wurzel) ist dann die Differenz zwischen der Blechdicke (bzw. der Rohrwandstärke) und der vertikalen Ausdehnung der Fase. Somit kann erfindungsgemäß die genaue Höhe der Wurzel bei der Bestimmung der Schweißparameter berücksichtigt werden.

Die Blechdicke, die über das gesamte Blech konstant ist, und der Werkstoff können beispielsweise vom Anlagenbediener eingegeben werden. Insofern ist das erfindungsgemäße Verfahren etwas aufwändiger und fehleranfälliger, weil die Geometrie der Schweißfuge nicht vollautomatisch ermittelt wird; dies wird aber - korrekte Eingabe vorausgesetzt - durch eine deutlich verbesserte Schweißnaht infolge der genaueren Bestimmung der Höhe des Stegs mehr als ausgeglichen. Durch die erfasste Geometrie können die Schweißparameter beispielsweise anhand von empirisch ermittelten Kennlinien für ähnliche Bauteile verwendet werden oder manuell vom Anlagenbediener eingegeben werden. Die Schweißparameter umfassen unter anderem das Bewegungsmuster einer Pendeleinheit, auf der ein Schweißkopf befestigt ist, die Vorschubgeschwindigkeit und das Lichtbogenmanagement (z.B. Schweißstrom A, Schweißspannung V).

Weiters können die Parameter des Schweißprozesses erfindungsgemäß weiter präzisiert werden, indem das Nahtsuchsystem zusätzlich die Flankentemperaturen und/oder die Vorwärm- bzw. Zwischenlagentemperaturen der Bleche bzw. Rohre und/oder den Höhenunterschied zwischen den Blechen bzw. Rohren misst und diese zusätzlich bei der Einstellung der Parameter berücksichtigt. Durch die kombinierte Messung der Temperatur und Geometrie wird der Ist-Zustand im Bereich der zu verbindenden Bauteilflanken erfasst und an eine Steuerungseinheit übertragen und entsprechende Schweißparameter errechnet bzw. Kennlinien eingestellt.

Ein weiterer erfindungsgemäßer Aspekt des Verfahrens besteht darin, dass das Nahtsuchsystem in einem Schnelldurchgang vor dem eigentlichen Schweißvorgang die genannten Parameter erfasst und bei Überschreiten von vorgegebenen Grenzwerten Warnungen aussendet oder den Schweißprozess verhindert. Dadurch kann, wenn beispielsweise die beiden Bleche zu weit voneinander entfernt sind, dies bereits vor Beginn des Schweißverfahrens gemeldet werden und es können entsprechende Korrekturschritte eingeleitet werden.

Produktionsbedingte Formabweichungen an den Flankenenden haben wesentlichen Einfluss auf deren Temperatur während des Schweißens und sind entscheidend bezüglich Durchbrand und unvollständiger Wurzelerfassung.

Unter Verwendung einer Datenbank mit hinterlegten empirisch ermittelten Kennlinien zur automatischen Prozesssteuerung unter Einbindung von Nahtsuch- und Prozessdaten sowie einer Datenbank mit normativen "Soll"-Vorgaben für den Abgleich mit den "Ist"-Daten aus der Prozess- und Schweißüberwachungseinheit sowie der ermittelten Sensordaten und der Eingaben des Bedienpersonals kann die Einstellung der Schweißparameter von einem Steuercomputer durchgeführt werden.

Während des Schweißens können entsprechend relevante Daten wie der Schweißstrom und die Schweißspannung protokoliert werden. Außerdem ist es nicht sinnvoll, den Schweißprozess fortzusetzen, wenn die zu verschweißenden Werkstücke zu weit voneinander entfernt sind oder sie nicht korrekt vorgewärmt sind. Dies wird erfindungsgemäß dadurch gelöst, dass der Schweißprozess gestoppt wird und/oder eine Warnung ausgegeben wird, wenn die vom Nahtsuchsystem gemessenen Werte oder während des Schweißprozesses protokolierte Parameter festgelegte Grenzwerte überschreiten.

Ein weiteres Ziel der vorliegenden Erfindung ist es, die erzeugte Schweißnaht schnell und kosteneffizient zu überprüfen. Dies wird erfindungsgemäß dadurch gelöst, dass ein Nahtüberwachungssystem, welches dem Schweißkopf unmittelbar nacheilt, thermische und visuelle Daten der Schweißnaht misst und speichert. Der im Zuge des Abkühlvorganges des Schweißprozesses erfasste charakteristische Temperaturverlauf an der Bauteiloberfläche gibt Aufschluss über den inneren Nahtaufbau. Der Temperaturverlauf wird entweder mit einem in der Datenbank abgelegten vergleichbaren, empirisch ermittelten Temperaturverlauf verglichen oder durch Beobachtung der Kontinuität des Temperaturverlaufes bewertet. Auch die Oberflächenform wird mit Sollwerten aus der Datenbank verglichen. Bei Überschreitung von Grenzwerten können akustische und/oder sichtbare Meldungen abgegeben werden, bzw. es erfolgt die Unterbrechung des Schweißprozesses.

### Kurze Beschreibung der Zeichnungsfiguren

Die Erfindung wird nun anhand der Zeichnungen näher erläutert. Dabei zeigt:
Fig. 1 beispielhaft die Geometrie von zwei zu verschweißenden Bauteilkanten;
Fig. 2 die Anordnung der Nahtsuch- und Überwachungssensoren an der Schweißvorrichtung;
Fig. 3 zeigt eine optimale Schweißnaht;
Fig. 4 und 5 zeigen fehlerhafte Schweißnähte;
und die Fig. 6 bis 8 zeigen beispielhafte Temperaturverläufe von Schweißnähten unmittelbar nach dem Schweißvorgang sowie die entsprechenden Schweißnähte.

### Beschreibung der Ausführungsarten

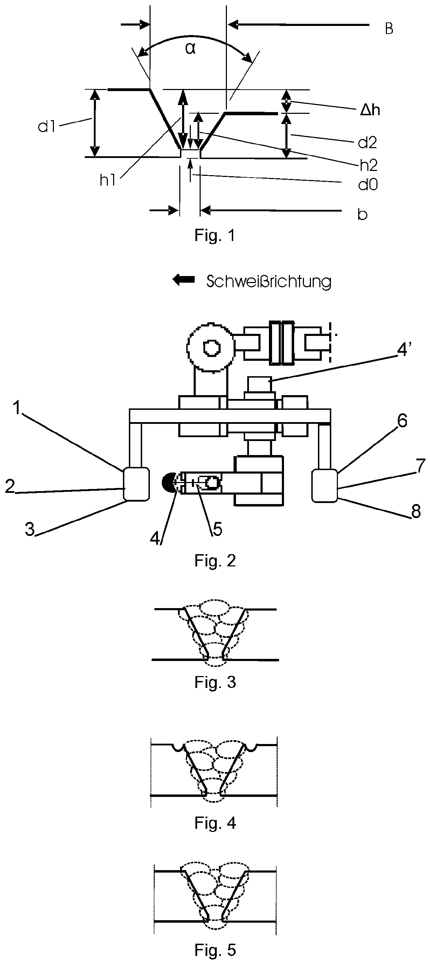

Fig. 1 zeigt zwei Bleche mit unterschiedlichen Dicken d1 und d2. Diese Bleche sind mit einem Abstand b, welcher gemessen wird, voneinander angeordnet. Zusätzlich wird der Abstand B an den oberen Kanten der Fasen sowie der Fasenwinkel α gemessen. Daraus kann man den vertikalen Abstand h1, h2 der Kanten der Fasen berechnen. Mit einem Laserscanner kann man den vertikalen Abstand h1, h2 auch direkt messen. Da in diesem Beispiel die Bleche unterschiedliche Dicken besitzen, weisen sie eine Höhendifferenz Δh auf, die auch vom Nahtsuchsystem erfasst wird. Kennt man nun die Dicke d1, d2 der Bleche, kann man die Dicke d0 des Abschnitts unterhalb der Fasen berechnen: d0 = d1-h1 oder d0 = d2-h2. Aufgrund dieser Werte, insbesondere b und d0, können passende Schweißparameter eingestellt werden. Weiters können die Schweißparameter noch besser eingestellt werden, wenn auch die Flankentemperatur und die Werkstoff-Vorwärmtemperatur bekannt sind. Die gemessene Höhendifferenz Δh wird nicht nur von der Differenz der Dicken bestimmt, sondern auch durch den vertikalen Versatz beeinflusst.

Fig. 2 zeigt eine beispielhafte Ausführung der erfindungsgemäßen Vorrichtung. In dieser Ausführungsform besteht das Nahtsuchsystem 1 aus einem thermischen Sensor 2 und einem visuellen Sensor 3. Der Schweißkopf 4, der an einem Pendelwerk 4' angeordnet ist, wird hinter dem Nahtsuchsystem 1 her bewegt, und Überwachungssensoren 5 protokollieren während des Schweißvorgangs die Schweißparameter wie beispielsweise die Pendelbewegung des Schweißkopfs oder den Schweißstrom. Das Nahtüberwachungssystem 6 wird hinter dem Schweißkopf her bewegt und besteht aus einem thermischen Sensor 7 und einem visuellen Sensor 8. Vor der erstmaligen Verwendung der Vorrichtung muss diese am Beginn der zu schweißenden Kante platziert werden. Dies kann mittels Joysticks oder durch eine Programmsteuerung speziell im Fall von wiederholten Schweißvorgängen durchgeführt werden. Weiters kann eine technische Zeichnung des zu schweißenden Werkstücks für die Steuerung des Gelenkarms verwendet werden. Dies sorgt für geringeren Arbeitsaufwand beim Bedienpersonal.

Fig. 3 zeigt eine Nahtoberfläche, die regelwerkskonform ist, Fig. 4 zeigt typische Einbrandkerben und Fig. 5 zeigt schroffen Nahtübergang. Diese Nahtformen können mit dem visuellen Sensor 8 erkannt werden.

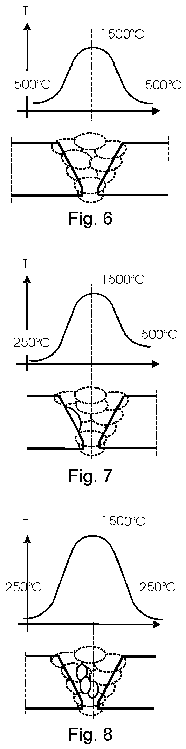

Fig. 6 zeigt den typischen Temperaturverlauf eines fehlerlosen Nahtaufbaus und den entsprechenden Nahtaufbau. Fig. 7 zeigt den typischen Temperaturverlauf bei Flankenbindefehlern. Dieser ist asymmetrisch, da sich das Blech neben dem Bindefehler weniger erwärmt. Fig. 8 zeigt den typischen Temperaturverlauf bei erhöhtem Porenanteil und den entsprechenden Nahtaufbau. Bei diesem Temperaturverlauf sind die Flanken weniger erwärmt als bei einem fehlerlosen Nahtaufbau. Die Temperaturverläufe aus den Fig. 6 bis 8 können mit dem thermischen Sensor 7 erfasst werden und anschließend entsprechend ausgewertet werden.

## Patentansprüche

1. Verfahren zur automatischen Steuerung eines Metall-Schweißprozesses zum Verschweißen von zwei Blechen oder Rohren mit einer V-Naht oder einer HV-Naht, basierend auf sensorgestützter visueller Datenerfassung eines der Schweißnaht vorauseilenden Nahtsuchsystems (1) und auf der Erfassung der realen Schweißparameter während des Schweißprozesses, wobei das Nahtsuchsystem (1) die Position der oberen und der unteren Kante der Fase von zumindest einem Blech bzw. Rohr misst, und wobei unter Berücksichtigung dieser gemessenen Parameter die Schweißparameter eingestellt werden, **dadurch gekennzeichnet, dass** der Schweißprozess ein Schweißprozess mit Wurzelschweißung ist, das heißt dass die Bleche bzw. Rohre vor dem Schweißprozess einen Abstand (b) von 2 mm (+/- 1 mm) zueinander haben und am unteren Ende des V ein Steg mit parallelen Wänden gebildet ist, und dass die Höhe (d0) des Stegs aus der Differenz der bekannten Blechdicke (d1, d2) bzw. der bekannten Rohrwandstärke und der gemessenen Höhe (h1, h2) der Fase berechnet wird.

2. Verfahren nach Anspruch 1, **dadurch gekennzeichnet, dass** das Nahtsuchsystem (1) zusätzlich die Flankentemperaturen und/oder die Vorwärmtemperaturen und/oder die Zwischenlagentemperatur der Bleche bzw. Rohre und/oder den Höhenunterschied zwischen den Blechen bzw. Rohren misst und diese zusätzlich bei der Einstellung der Parameter berücksichtigt.

3. Verfahren nach Anspruch 1 oder 2, **dadurch gekennzeichnet, dass** das Nahtsuchsystem (1) in einem Schnelldurchgang vordem eigentlichen Schweißvorgang die genannten Parameter erfasst und bei Überschreiten von vorgegebenen Grenzwerten Warnungen aussendet oder den Schweißprozess verhindert.

4. Verfahren nach einem der Ansprüche 1 bis 3, **dadurch gekennzeichnet, dass** der Schweißprozess gestoppt wird und/oder eine Warnung ausgegeben wird, wenn die vom Nahtsuchsystem (1) gemessenen Werte oder während des Schweißprozesses protokollierte Parameter festgelegte Grenzwerte überschreiten.

5. Verfahren zur automatischen Überwachung eines Metall-Schweißprozesses nach einem der Ansprüche 1 bis 4, **dadurch gekennzeichnet, dass** ein Nahtüberwachungssystem (6), welches dem Schweißkopf (4) unmittelbar nacheilt, thermische und visuelle Daten der Schweißnaht misst und speichert.
